# EUROPEAN PATENT APPLICATION

(11) **EP 1 986 036 A1**
(43) Date of publication of application: **29.10.2008**
(21) Application number: 08154636.8
(22) Date of filing: 16.04.2008
(51) Int. Cl.: G02C 5/22

(54) **Hinge for eyeglasses, particularly for articulation of the temple to the end piece**

(30) Priority: 27.04.2007 IT PD20070155
(71) Applicant: Allison S.p.A., 35129 Padova PD (IT)
(72) Inventor: Vecellio Reane, Silvio, 35139, PADOVA (IT)
(74) Representative: Modiano, Micaela Nadia

(57) **Abstract**

A hinge for eyeglasses (10), particularly for articulation of the temple (11) to the end piece (12), which comprises a pivot (13) which is connected to one of the parts that compose the hinge (10) and is provided with a circumferential groove (14) which has a substantially V-shaped profile and a beveled end (16) for insertion in an open ring (17) which is associated with another of the parts that compose the hinge (10) and is deformable radially and elastically for mating with the pivot (13), engaging the groove (14) thereof.

## Description

The present invention relates to a hinge for eyeglasses, particularly for articulation of the temple to the end piece.

Hinges for eyeglasses are currently known which are provided in various shapes but substantially all have in common the fact that they comprise a fork-like element in which the prongs are perforated transversely for the insertion of a pivot which passes through them, simultaneously also entering a perforated element which is interposed between them.

The fork is generally monolithic with the front of the eyeglasses or, if not provided, with the end piece, while the temple has, at the end to be hinged, a perforated protrusion to be inserted snugly between the prongs of the fork.

The pivot is inserted so as to pass fully through the holes of the prongs and the hole of the protrusion and is usually provided with a threaded stem in order to be fastened onto the fork.

Frames are also known which comprise temples, end pieces associated with lenses and the bridge for connecting the lenses which are made of bent wire, usually spring steel or titanium.

The hinges of these frames are obtained by coupling a pivot to loops of wire obtained at the ends to be pivoted of the end pieces and of the temples.

These hinges provide for the fastening of the pivot, which is conveniently threaded, by means of a lock nut or a similar element.

The hinges described so far have the drawback of not being simple to assemble or disassemble, for example if a repair is necessary, mainly due to the small dimensions of the pivots to be screwed or unscrewed in order to fasten them or disassemble them.

Another type of currently known frame has a temple which is forkshaped at the end to be hinged so that it can receive, with a snap-acting interlocking, the pivot, which is associated with the front or end piece of the eyeglasses.

The components of these frames are generally made of plastic material in order to allow easy interlocking coupling between the fork and the pivot, so as to allow the user to replace the temples of the eyeglasses easily.

Since these hinges are made of plastic material, they have the drawback of becoming worn more easily than metal hinges, particularly if the temples are replaced frequently; however, the use of metals to provide the forks and the pivots is not advisable, since it entails a higher resistance to deformation of the fork, to the full disadvantage of simplicity in assembly and replacement of the temple.

The aim of the present invention is to obviate the above mentioned drawbacks, by providing a hinge for eyeglasses which is easy to use and simple to assemble.

Within this aim, an object of the invention is to provide a hinge for eyeglasses which is resistant to wear and is highly durable.

Another object of the invention is to provide a hinge for eyeglasses which is structurally simple and can be manufactured at low costs.

This aim and these and other objects, which will become better apparent hereinafter, are achieved by a hinge for eyeglasses, particularly for articulation of the temple to the end piece, characterized in that it comprises a pivot which is connected to one of the parts that compose the eyeglass and is provided with a circumferential groove which has a substantially V-shaped profile and a beveled end for the insertion in an open ring which is associated with another of the parts that compose the eyeglass and is deformable radially and elastically for mating with said pivot, engaging said groove thereof.

Further characteristics and advantages of the invention will become better apparent from the following detailed description of some preferred but not exclusive embodiments of the hinge for eyeglasses according to the invention, illustrated by way of non-limiting example in the accompanying drawings, wherein:

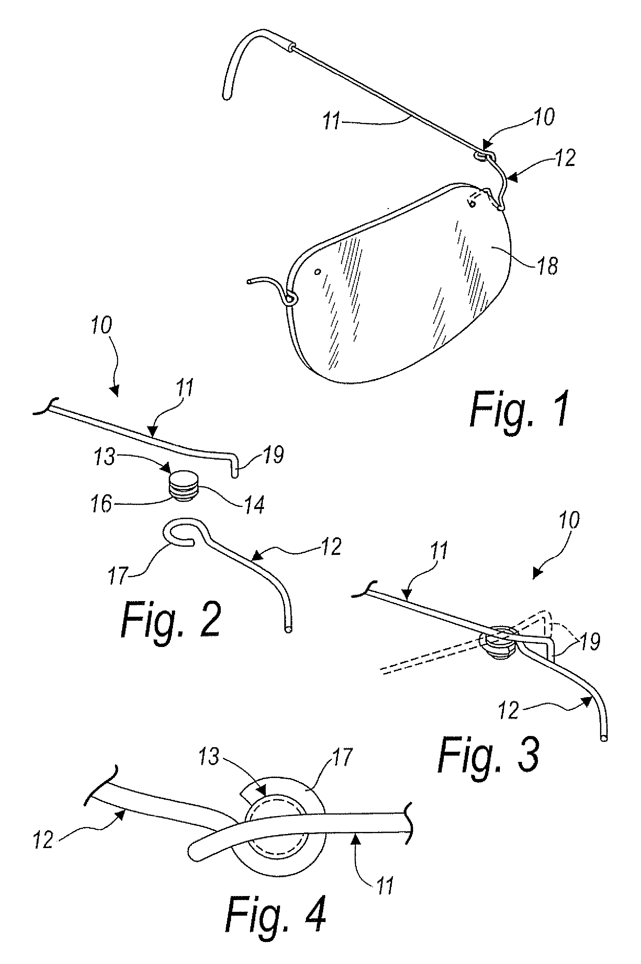

Figure 1 is a perspective view of a part of a frame with a hinge for eyeglasses, according to the invention;
Figure 2 is an exploded perspective view of the hinge for eyeglasses according to the invention of the frame shown in Figure 1;
Figure 3 is a perspective view of the hinge for eyeglasses according to the invention in the assembled condition;
Figure 4 is a top plan view of the hinge for eyeglasses according to the invention;
Figure 5 is a sectional view of the hinge for eyeglasses according to the invention;
Figure 6 is a sectional view of the hinge for eyeglasses according to the invention in a disassembled condition;
Figure 7 is a sectional view of a second embodiment of the hinge for eyeglasses according to the invention in the disassembled condition;
Figure 8 is a sectional view of the second embodiment of the hinge for eyeglasses according to the invention in the assembled condition.

It is noted that anything found to be already known during the patenting process is understood not to be claimed and to be the subject of a disclaimer.

With reference to the figures, the reference numeral 10 generally designates a hinge for eyeglasses which articulates a temple 11 to an end piece 12 of the eyeglass.

Advantageously, both the body of the temple 11 and the end piece 12 are made of wire, conveniently spring steel, as shown in the figures.

According to the invention, the hinge 10 comprises a pivot 13, which preferably has one end connected, for example welded to a first part of the eyeglass, for example the temple 11 and is provided with a circumferential groove 14 which has a substantially V-shaped cross-sectional profile.

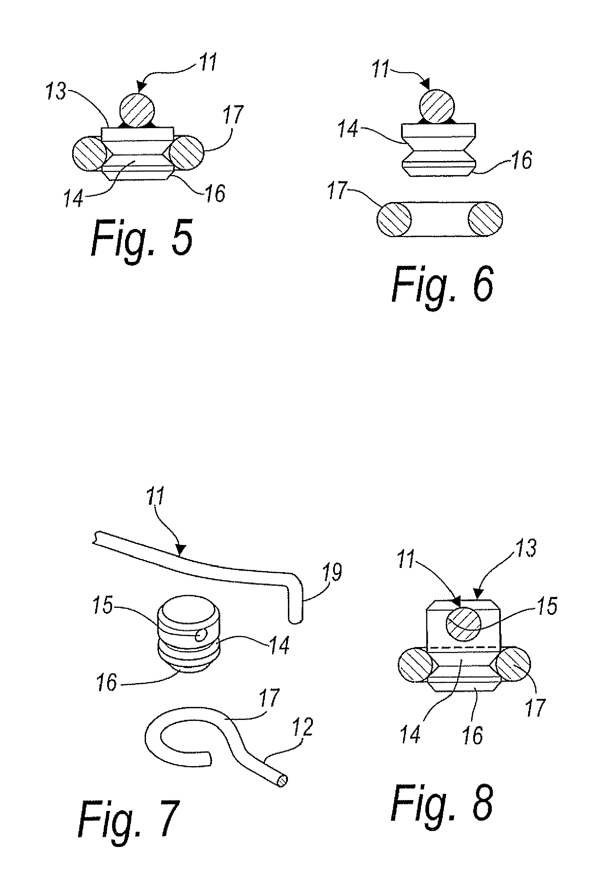

As an alternative, the pivot 13 has, at one end, a mating seat, preferably a diametrical hole 15 for mating with the temple 11, as shown in Figures 7 and 8; this embodiment is preferred particularly if the temple 11 and/or the pivot 13 are made of titanium.

Further, the pivot 13 conveniently has, at the free end, a beveled edge 16 which is adapted to facilitate its insertion in an open ring 17 which is conveniently connected with a second part of the eyeglass, for example the end piece 12.

Advantageously, the end of the end piece 12 that is not associated with a lens 18 is coiled so as to form the open ring 17.

A particularity of the hinge for eyeglasses according to the invention is that the open ring 17 is elastically deformable in a radial direction in order to mate with the pivot 13 by engaging its groove 14.

More particularly, once the pivot 13 has been inserted in the open ring 17, the ring engages its groove 14, expanding elastically, and therefore the resulting elastic return force acts as a force for centering the pivot 13 in the ring 17; it further provides a friction force between the pivot 13 and the open ring 17 which contrasts its relative rotation, so that the temple is not loose.

Preferably, the temple 11 has an end fold 19, proximate to the pivot 13, which is adapted to engage by abutment the end piece 12 to stop their relative rotation about the axis of the pivot 13.

In an equivalent embodiment, the pivot 13 is associated with the end piece 12 by welding or mating at the hole 15, while the open ring 17 is formed on the temple 11, preferably by coiling its end so as to form the open ring 17.

In this solution, advantageously the end piece 12 has a bend 19 of the end that is not associated with the lens 18 which is adapted to engage by abutment the temple 11 to stop their relative rotation about the axis of the pivot 13.

The use of the hinge 10 for eyeglasses according to the invention is as follows.

The hinge is provided by bending the temple 11 or the end piece 12 to form the open ring 17 and by associating the pivot 13 at one end respectively with the end piece 12 or with the temple 11 by welding or mating at the hole 15.

Assembly of the hinge is therefore extremely simple: the pivot 13 is forced into the open ring 17, which expands radially, sliding first on the beveled edge 16 and then on the lateral surface of the pivot 13 in order to engage the groove 14, adhering thereto by elastic return.

In practice it has been found that the invention achieves the intended aim and objects, providing a hinge for eyeglasses which is easy to use, is simple to assemble and disassemble and can be manufactured with low costs.

Further, a hinge according to the invention is easy to provide by using wire, therefore having good resistance to wear.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the contingent shapes and dimensions, may be any according to requirements and to the state of the art.

The disclosures in Italian Patent Application No. PD2007A000155 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A hinge for eyeglasses (10), particularly for articulation of the temple (11) to the end piece (12) of an eyeglass, **characterized in that** it comprises a pivot (13) which is connected to one of the parts of the eyeglass that compose the hinge (10) and is provided with a circumferential groove (14) which has a substantially V-shaped profile for engagement with an open ring (17) which is associated with a second part of the eyeglass that compose the hinge (10) and is deformable radially and elastically for mating with said pivot (13), engaging said groove (14) thereof.

2. The hinge for eyeglasses according to claim 1, **characterized in that** the temple (11) comprises a wire body and the end piece (12) is made of wire.

3. The hinge for eyeglasses according to the preceding claims, **characterized in that** said pivot is preferably jointly connected to the temple (11) and said open ring (17) is formed on the end piece (12).

4. The hinge for eyeglasses according to the preceding claims, **characterized in that** the end of the end piece (12) that is not associated with the lens is coiled so as to form said open ring (17).

5. The hinge for eyeglasses according to one or more of the preceding claims, **characterized in that** said pivot (13) is provided with a beveled guiding end (16) for insertion in said open ring (17).

6. The hinge for eyeglasses according to one or more of the preceding claims, **characterized in that** said pivot is welded to the temple (11).

7. The hinge for eyeglasses according to claims 1 to 5, **characterized in that** said pivot has a seat for mating with the temple (11).

8. The hinge for eyeglasses according to one or more of the preceding claims, **characterized in that** said temple (11) has an end bend (19) proximate to said pivot which can engage by abutment said end piece (12) to stop the rotation of said temple (11), about the axis of said pivot, with respect to said end piece (12).

9. The hinge for eyeglasses according to claims 1 and 2, **characterized in that** in another embodiment said pivot is jointly connected to the end piece (12) associated with the lens, while said open ring (17) is formed on the temple (11).

10. The hinge for eyeglasses according to claims 1, 2 and 9, **characterized in that** the temple (11) has the end to be pivoted which is coiled so as to form said open ring (17).

11. The hinge for eyeglasses according to claims 1, 2, 9 and 10, **characterized in that** said pivot is welded to the end piece (12).

12. The hinge for eyeglasses according to claims 1, 2 and 9 to 11, **characterized in that** said pivot has a seat for mating with the end piece (12).

13. The hinge for eyeglasses according to one or more of claims 1, 2 and 9 to 12, **characterized in that** said end piece (12) has an end bend (19), proximate to said pivot, which can engage by abutment said temple (11) to stop the rotation of said temple (11) about the axis of said pivot with respect to said end piece (12).
